# EUROPÄISCHE PATENTSCHRIFT

(11) **EP 1 723 192 B1**
(45) Veröffentlichungstag und Bekanntmachung des Hinweises auf die Patenterteilung: **21.11.2007**
(21) Anmeldenummer: 05715272.0
(22) Anmeldetag: 08.02.2005
(51) Int. Cl.: C08G 69/16, C08G 69/04

(54) **KONTINUIERLICHES VERFAHREN ZUR HERSTELLUNG VON POLYAMIDEN**
CONTINUOUS METHOD FOR THE PRODUCTION OF POLYAMIDES
PROCEDE DE PRODUCTION EN CONTINU DE POLYAMIDES

(30) Priorität: 12.02.2004 DE 102004006955
(43) Veröffentlichungstag der Anmeldung: 22.11.2006
(73) Patentinhaber: BASF Aktiengesellschaft, 67056 Ludwigshafen (DE)
(72) Erfinder: DEININGER, Jürgen, 68723 Oftersheim (DE); DEMETER, Jürgen, 67069 Ludwigshafen (DE); HAHN, Thilo, 55234 Freimersheim (DE); KORY, Gad, 69251 Gaiberg (DE); SÖTJE, Oliver, 68199 Mannheim (DE); ZEHNER, Peter, 67071 Ludwigshafen (DE)
(74) Vertreter: Isenbruck, Günter
(86) Internationale Anmeldenummer: PCT/EP2005/001248
(87) Internationale Veröffentlichungsnummer: WO 2005/078004

(56) Entgegenhaltungen:
- WO-A-00/24808
- WO-A-99/38907

## Beschreibung

Die Erfindung betrifft ein kontinuierliches Verfahren zur Herstellung von Polyamiden, deren Oligomeren oder Gemischen davon unter Einsatz von wässrigen Monomer- und Oligomer-Extrakten, die bei der Herstellung von Polyamiden während der Extraktion des Polymerisats mit Wasser anfallen.

Die bei der Herstellung von Polyamiden durch Polymerisation von beispielsweise ε-Caprolactam entstehenden Polymere enthalten niedermolekulare Anteile, die aus Caprolactam und Oligomeren davon bestehen. In der Praxis werden diese niedermolekularen Anteile durch Extraktion mit heißem Wasser entfernt. Aus diesen Extraktionswässern (wässrigen Monomer- und Oligomer-Extrakten) kann man den Caprolactam-Anteil zurückgewinnen, reinigen und gegebenenfalls wieder in die Polymerisation einführen. Es ist auch möglich, durch Zusatz von spaltenden Reagenzien die in den Extraktwässern enthaltenen Oligomere zu Caprolactam umzusetzen, dieses gleichfalls zu isolieren, zu reinigen und wieder zu verwenden.

Die meisten bekannten Verfahren haben den Nachteil, dass eine z. T. mehrstufige Aufarbeitung des Extraktwassers erfolgen muss, bevor der gesamte Extrakt oder Extraktbestandteile, insbesondere Caprolactam, zur erneuten Polymerisation eingesetzt werden können. Die Verfahren, die eine Abtrennung, Aufarbeitung und Recyclierung von Caprolactam vorschlagen, weisen zudem den Nachteil auf, dass die in den Extraktwässern enthaltenen Oligomere nicht aufgearbeitet werden, sondern entsorgt werden müssen. Des Weiteren wird in den genannten Verfahren zur Wiederverwertung von Extraktwasser der Einsatz einer Verfahrensstufe zur hydrolytischen Polymerisation des Extraktwasserkonzentrats oder einer Mischung aus Extraktwasserbestandteilen und Caprolactam vorausgesetzt.

Die WO 99/38907 betrifft ein Verfahren zur Recyclierung von Extraktwasser, d.h. wässrigen Monomer- und Oligomer-Extrakten, die bei der Herstellung von Polyamiden während der Extraktion des Polymerisats mit Wasser anfallen, bei dem die wässrigen Extraktlösungen möglichst direkt ohne vorherige Aufarbeitung, Aufkonzentrierung oder Abtrennungsschritte bei der Polymerisation von Aminonitrilen eingesetzt werden können. Das Verfahren zur Wiederverwertung der wässrigen Extrakte kann diskontinuierlich durchgeführt werden.

Ein kontinuierliches Polymerisationsverfahren zur Herstellung von Polyamiden aus Aminonitrilen ist in der WO 00/24808 beschrieben. Dabei wird die Umsetzung zweiphasig in einer Gegenstrom-(reaktiv)destillationskolonne durchgeführt. In die von oben nach unten durchströmte Kolonne wird im unteren Bereich an mehreren Stellen Wasserdampf eingeleitet. Der Zusatz von Wasser zur Temperatursteuerung im mittleren Bereich der Destillationskolonne ist ebenfalls möglich.

Die WO 99/10408 betrifft ein Verfahren zur Herstellung von Polyamiden aus Polyamidmonomeren, die zunächst zu Präpolymeren umgesetzt werden. Die Präpolymerlösung wird in einem Flasher und nachfolgendem Separator aufgetrennt, und das erhaltene feste Präpolymer wird kristallisiert und in einem Festphasen-Polymerisationsreaktor zu einem Polyamid mit hohem Molekulargewicht weiter umgesetzt.

Bei der Herstellung von Polyamiden aus Aminonitrilen oder Dinitrilen und Diaminen ist bei den bekannten Verfahren die Hydrolyse der Ausgangsmonomere noch verbesserungswürdig. Beispielsweise ist es vielfach erwünscht, ein Präpolymer mit hohem Carboxylendgruppengehalt zu erhalten, das in den nachfolgenden Stufen vorteilhaft in ein Polyamid überführt werden kann.

Aufgabe der vorliegenden Erfindung ist die Bereitstellung eines Verfahrens zur Herstellung von Polyamiden, das die Herstellung von Polyamiden und deren Präpolymeren mit einem hohen Carboxylendgruppengehalt erlaubt und die Nachteile der bekannten Verfahren vermeidet.

Die Aufgabe wird erfindungsgemäß gelöst durch ein kontinuierliches Verfahren zur Herstellung von Polyamiden, deren Oligomeren oder Gemischen davon, gegebenenfalls mit weiteren Umsetzungsprodukten, durch Umsetzung von Aminonitrilen oder Dinitrilen und Diaminen oder Gemischen davon, gegebenenfalls zusammen mit weiteren polyamidbildenden Monomeren und/oder Oligomeren, mit einem wässrigen Medium aus wässrigen Monomer- und Oligomer-Extrakten, die bei der Herstellung von Poly-amiden während der Extraktion des Polymerisats mit Wasser anfallen, in einem Reaktor mit vertikaler Längsachse, der im Wesentlichen in Längsrichtung durchflossen wird, wobei Wasser und/oder das wässrige Medium an mindestens zwei unterschiedlichen Stellen entlang der vertikalen Längsachse in den Reaktor eingeführt werden, wobei an mindestens einer Stelle das wässrige Medium eingeführt wird. Vorzugsweise wird nur wässriges Medium an den mindestens zwei unterschiedlichen Stellen in den Reaktor geführt.

Es wurde erfindungsgemäß gefunden, dass durch Verwendung von wässrigen Mono- oder Oligomer-Extrakten, die bei der Herstellung von Polyamiden während der Extraktion des Polymerisats mit Wasser anfallen, anstelle von Wasser allein Polyamide und insbesondere Präpolymere mit einem hohen Carboxylendgruppengehalt erhalten werden, wenn das wässrige Medium aus wässrigen Monomer- und Oligomer-Extrakten an mindestens zwei unterschiedlichen Stellen entlang der vertikalen Längsachse in den Reaktor eingeführt wird. Dabei kann das wässrige Medium beispielsweise an 2 bis 4 Stellen zugeführt werden. Es ist möglich an vorzugsweise bis 20, besonders bevorzugt bis zu 10 Positionen das wässrige Medium zuzufügen. Dabei kann das wässrige Medium gemäß einer Ausführungsform an 2 bis 20 bzw. 3 bis 20 unterschiedlichen Stellen entlang der vertikalen Längsachse in den Reaktor eingeführt werden. Die einzelnen Zufügungsstellen sind dabei räumlich voneinander beabstandet entlang der Längsrichtung des Reaktors vorgesehen. Die Zuführung kann, bezogen auf einen Querschnitt durch den Reaktor senkrecht zur Längsachse, im Randbereich, in der Mitte oder an mehreren Stellen dazwischen erfolgen.

Durch den Zusatz des wässrigen Mediums an mehrere Stellen im Reaktionsverlauf verteilt wird zum einen ein besser hydrolysiertes (Prä)polymer erhalten, das damit einen höheren Gehalt an Carboxylendgruppen aufweist. Ferner kann das Temperaturprofil im Reaktor geglättet bzw. vereinheitlicht werden. Dies ist insbesondere möglich, wenn an den weiteren Stellen im Verlauf des Reaktors nicht aufgeheiztes wässriges Medium eingespeist wird. Damit kann die Exothermie der Hydrolysereaktion abgefangen und ausgeglichen werden. Neben der verbesserten Hydrolyse weisen Polyamide bzw. Polyamidpräpolymere gemäß des erfindungsgemäßen Verfahrens auch eine verringerte Produktschädigung, wie z. B. ein minimales Amino- und Carboxylendgruppendefizit auf, da durch die erfindungsgemäße Reaktionsführung hot-spots, d. h. Bereiche mit deutlich höherer Temperatur, die zu unerwünschten Nebenreaktionen führen können, vermieden werden. Am Reaktoreingang wird dagegen in der Regel vorgewärmtes wässriges Medium eingesetzt. Durch die aufgeteilte Zuführung im Verlauf des Reaktors ist es damit auch möglich, Energie einzusparen, da nicht, wie üblich, die Gesamtmenge des Wassers aufgeheizt werden muss. Die Position und Anzahl der unterschiedlichen Zuführungen entlang des kontinuierlich durchströmten Reaktors kann den praktischen Erfordernissen angepasst werden, um zum einen ein möglichst homogenes Temperaturprofil über die Länge und den Querschnitt des Reaktors und eine möglichst weitgehende Hydrolyse bei der Herstellung des (Prä)polymers zu erhalten. Entsprechende Positionen entlang des Reaktors sind durch einfache Versuche zu ermitteln. Die Aufteilung der Menge des wässrigen Mediums auf die einzelnen Zuführungsstellen wird ebenfalls in der Weise ausgelegt, dass eine möglichst weitgehende Hydrolyse und ein möglichst homogenes Temperaturprofil resultieren. Typischerweise werden am Reaktoreingang 35 bis 95 Gew.-%, besonders bevorzugt 50 bis 75 Gew.-% des insgesamt dem Reaktor zugeführten wässrigen Mediums eingespeist. Der verbleibende Anteil des wässrigen Mediums verteilt sich auf die einzelnen weiteren Zuführstellen. Vorzugsweise wird an den einzelnen Stellen Wasser derart zugesetzt, dass die Unterschiede an den einzelnen Stellen maximal 50 Gew.-% betragen.

Das erfindungsgemäß eingesetzte wässrige Medium fällt bei der Herstellung von Polyamiden während der Extraktion des Polymerisats mit Wasser an. Es können beispielsweise die in WO 99/38907 und DE-A-198 08 442 beschriebenen wässrigen Monomer- und Oligomer-Extrakte eingesetzt werden.

Das erfindungsgemäß eingesetzte wässrige Medium hat vorzugsweise einen Feststoffgehalt im Bereich von 2 bis 30 Gew.-%, besonders bevorzugt 3 bis 15 Gew.-%, insbesondere 4 bis 10 Gew.-%. Es ist möglich, anfallende Extraktwässer aufzukonzentrieren oder mit Wasser zu verdünnen, um den gewünschten Extraktgehalt zu erreichen.

Vorzugsweise sind mindestens 50 Gew.-% der Feststoffe im wässrigen Medium, bezogen auf die Feststoffe, Lactame und cyclische oligomere Lactame mit 2 bis 6 Ringgliedern, die sich vom eingesetzten Aminonitril ableiten. Für Dinitrile und Diamine gilt entsprechendes.

Dabei werden die wässrigen Monomer- und Oligomer-Extrakte insbesondere ohne weitere Aufarbeitungsschritte in die Polymerisation zurückgeführt. Damit ist keine Aufkonzentrierung, Auftrennung oder Reinigung notwendig.

Typischerweise enthalten die wässrigen Monomer- und Oligomer-Extrakte, die direkt aus der Extraktion stammen, 3 bis 20 Gew.-%, vorzugsweise 4 bis 15, insbesondere 5 bis 12 Gew.-% Feststoffe.

Bei PA 6 liegen Caprolactam und dessen cyclische Oligomere mit 2 bis 5 Ringgliedern vorzugsweise in einem Gewichtsverhältnis von 60 bis 90 : 5 bis 20 : 3 bis 17 : 2 bis 8 : 1 bis 5 vor, bezogen auf Caprolactam und 2-, 3-, 4- bzw. 5-Ringe. Beispielsweise kann das Gewichtsverhältnis im Bereich von 70 bis 80 : 8 bis 12 : 3 bis 11 : 3 bis 7 : 2 bis 4 liegen. Ein Beispiel weist Gewichtsverhältnisse von etwa 79 : etwa 10 : etwa 5 : etwa 4 : etwa 2 auf.

Bei einem Extraktwasser, das auf etwa 70 Gew.-% Feststoffgehalt aufkonzentriert wurde, liegen die einzelnen Strukturen beispielsweise im Verhältnis 50 bis 80 : 1 bis 5 : 0,5 bis 2 : 0,3 bis 2 : 0,02 bis 1 vor. Bevorzugte Bereiche sind 60 bis 70 : 2 bis 4 : 0,8 bis 1,3 : 0,6 bis 0,9 : 0,1 bis 0,7.

Durch Einsatz des vorstehend beschriebenen wässrigen Extraktes kontinuierlich entlang des Reaktionsverlaufs im ersten Reaktor an unterschiedlichen Positionen ist es möglich, die Exothermie der Umsetzung abzufangen und beispielsweise die Temperatur im gesamten Reaktor weitgehend homogen einzustellen. Dies bedeutet beispielsweise, dass die Temperatur im bevorzugten Bereich von 220 bis 245°C liegen kann, Somit lassen sich Polyamide bzw. Polyamidpräpolymere mit geringer Produktschädigung erhalten. Der Reaktor kann somit adiabatisch gefahren werden, und nur der wässrige Extrakt und das Aminonitril oder Dinitril und Diamin und gegebenenfalls weitere polyamidbildende Monomere/Oligomere am Einlass des Reaktors werden in der Regel aufgeheizt. Gegenüber einer Zudosierung der gesamten Wassermenge am Eingang des Reaktors wird ein besser hydrolysiertes Präpolymer mit einer geringeren Produktschädigung erhalten, der Energiebedarf des Verfahrens wird gesenkt, und die Lebensdauer bzw. die Hydrolyseperformance des gegebenenfalls verwendeten Katalysators wird verlängert. Gemäß einer Ausführungsform der Erfindung wird die Umsetzung im ersten Reaktor einphasig in flüssiger Phase durchgeführt. Insbesondere bei dieser Fahrweise ist die Steuerung der Exothermie des Verfahrens wichtig, da die entstehende Wärme in der Regel nicht auf einfache Weise aus dem Reaktor ausgetragen werden kann.

Der im erfindungsgemäßen Verfahren eingesetzte Reaktor weist eine vertikale Längsachse auf und wird im Wesentlichen in Längsrichtung durchflossen. Vorzugsweise ist der Reaktor ein Strömungsrohr, ein TVA Reaktor (wie beispielsweise beschrieben in Ullmann's Encyclopedia of Industrial Chemistry, 6^{th} edition, 2000 Electronic release) ein Mehrkammerreaktor, der im Gleich- oder Gegenstrom betrieben wird, eine Destillationsvorrichtung oder eine Reaktivdestillationsvorrichtung.

Gemäß einer Ausführungsform ist der Reaktor ein Mehrkammerreaktor oder ein Strömungsrohr, an dessen einem Ende Aminonitrile oder Dinitrile und Diamine oder Gemische davon, gegebenenfalls zusammen mit weiteren polyamidbildenden Monomeren und/oder Oligomeren und ein erster Teil des wässrigen Mediums eingespeist werden, in dessen Verlauf weitere Teile des wässrigen Mediums zugefügt werden und an dessen anderem Ende ein Polyamide, deren Oligomere oder Gemische davon enthaltendes Umsetzungsgemisch ausgetragen wird.

Gemäß einer weiteren Ausführungsform ist der Reaktor eine Reaktivdestillationsvorrichtung, oder der Reaktor ist ein Strömungsrohr, an das sich eine Reaktivdestillationsvorrichtung anschließt, wobei in der Reaktivdestillationsvorrichtung das Umsetzungsprodukt aus dem Sumpf ausgeschleust wird und entstehendes Ammoniak und gegebenenfalls weitere entstehende niedermolekulare Verbindungen und Wasser über Kopf abgezogen werden.
Geeignete kontinuierlich betriebene Reaktoren sind an sich bekannt. Sie sind beispielsweise beschrieben in DE-A-196 35 077, DE-A-198 08 407, EP-A-1 053 275, EP- A-1 054 919, WO 99/038907, WO 00/24808.

Eine Reaktivdestillationsvorrichtung kann beispielsweise eine Bodenkolonne, Blasensäule oder Trennwandkolonne aufweisen.

Die Reaktoren sind jeweils so modifiziert, dass sie die Einführung des wässrigen Mediums an mindestens zwei unterschiedlichen Stellen entlang der vertikalen Längsachse erlauben. Entsprechende Modifikationen des Reaktors sind dem Fachmann bekannt.

Gemäß einer Ausführungsform der Erfindung erfolgt das Verfahren in einem Reaktor mit vertikal ausgerichteter Längsachse, wobei in dem Reaktor das Umsetzungsprodukt aus dem Sumpf ausgeschleust und entstehendes Ammoniak und gegebenenfalls weitere entstehende niedermolekulare Verbindungen und Wasser über Kopf abgezogen werden, wobei der Reaktor
- mindestens zwei, in Längsrichtung übereinander angeordnete Kammern aufweist, wobei
- die Kammern voneinander durch flüssigkeitsdichte Böden getrennt sind,
- jede Kammer durch je einen Flüssigkeitsüberlauf mit der unmittelbar darunterliegenden Kammer verbunden ist und über den Flüssigkeitsüberlauf der untersten Kammer ein flüssiger Produktstrom abgezogen wird,
- der Gasraum oberhalb des Flüssigkeitsspiegels in jeder Kammer mit der jeweils unmittelbar darüber angeordneten Kammer durch ein oder mehrere Leitrohre verbunden ist, das (die) jeweils in einen Gasverteiler mit Öffnungen für den Gasaustritt unterhalb des Flüssigkeitsspiegels mündet,
- sowie mit jeweils mindestens einem um jeden Gasverteiler vertikal angeordneten Leitblech dessen oberes Ende unterhalb des Flüssigkeitsspiegels und dessen unteres Ende oberhalb des flüssigkeitsdichten Bodens der Kammer endet und das jede Kammer in einen oder mehrere begaste und in einen oder mehrere unbegaste Räume trennt.

Der Gasverteiler von Reaktor kann syphonartig in Form einer oben geschlossenen Haube, ausgebildet sein.

Die Haube des siphonartigen Gasverteilers kann in ihrem unteren Teil offen sein.

Die Haube(n) des (der) siphonartigen Gasverteiler(s) können aus zwei oder mehreren miteinander verbundenen Teilen gebildet sein, die im Querschnitt kreuzförmig und/oder parallel oder konzentrisch oder radial angeordnet sind.

Die Anzahl und Größe der Öffnungen für den Gasaustritt sowie deren Abstand vom Flüssigkeitsspiegel in der Kammer kann man in der Weise festlegen, dass der Druckverlust des gasförmigen Stromes im Gasverteiler im Bereich von 0,5 bis 50 mbar ist.

Die Öffnungen für den Gasaustritt können auf jeweils gleicher Höhe zueinander angeordnet sein.

Die Öffnungen für den Gasaustritt können im unteren Teil der Haube(n) in einem Abstand von 1 bis 15 cm vom unteren Ende der Haube(n) angeordnet sein.

Das (die) Leitblech(e) können jeweils derart zur Flüssigkeitsoberfläche sowie zum Boden der Kammer beabstandet sein, dass im Wesentlichen keine Drosselung der Flüssigkeitsströmung durch das (die) Leitblech(e) erfolgt.

Das jeweils mindestens eine um jeden Gasverteiler vertikal angeordnete Leitblech kann in Form eines Einsteckrohrs ausgebildet sein.

Das (die) Leitblech(e) und der (die) Gasverteiler können dergestalt angeordnet sein, dass die unbegaste Querschnittsfläche im Bereich von 10 bis 80 %, bevorzugt von 40 bis 60 %, besonders bevorzugt etwa 50 % der Summe von begaster und unbegaster Querschnittsfläche beträgt.
In einer oder mehreren, bevorzugt in allen Kammern des Reaktors kann ein Feststoffkatalysator eingebracht sein, insbesondere als Feststoffschüttung oder in Form einer mit Katalysator beschichteten geordneten Packung, beispielsweise eines Monolithen.

In einer oder mehreren, bevorzugt in allen Kammern kann ein Ionenaustauscherharz eingebracht sein.

Reaktor stellt einen Apparat dar, der ohne bewegte Apparateteile, durch eine Air-Lift-Umwälzung der Flüssigkeit, eine ausgezeichnete Phasendurchmischung bei mehrphasigen Reaktionen und eine nahezu konstante Zusammensetzung des Reaktionsgemisches jeweils über das gesamte Volumen in jeder Kammer gewährleistet, das heißt sowohl über deren Querschnitt als auch insbesondere über die Flüssigkeitshöhe, bei gleichzeitig einfacher Auftrennung zwischen flüssiger und gasförmiger Phase nach erfolgter Reaktion. Durch den Gasaustritt aus dem Gasverteiler in den Flüssigkeitsraum zwischen Gasverteiler und dem oder den um den Gasverteiler herum vertikal angeordneten Leitblech oder Leitblechen wird der hydrostatische Druck in diesem Flüssigkeitsraum gegenüber dem nicht begasten Flüssigkeitsraum abgesenkt, wodurch ein Druckgefälle entsteht, das in kinetische Energie umgesetzt wird. Dieses Druckgefälle setzt die Air-Lift-Umwälzung in Form einer Strömung in Gang, die im begasten Raum, das heißt im Raum zwischen dem Gasverteiler und dem oder den um den Gasverteiler herum angeordneten Leitblech (Leitblechen) nach oben gerichtet ist, im Bereich oberhalb des obersten Endes des Leitblechs (der Leitbleche) und unterhalb des Flüssigkeitsspiegels durch das Leitblech (die Leitbleche) umgelenkt wird, den nicht begasten Flüssigkeitsraum außerhalb des Leitblechs (der Leitbleche) von oben nach unten durchströmt und oberhalb des flüssigkeitsdichten Bodens der Kammer und unterhalb des untersten Endes des Leitblechs (der Leitbleche) erneut in eine von unten nach oben gerichtete Strömung umgelenkt wird, wodurch die Schlaufenbewegung geschlossen wird.

Der Reaktor ist ein Apparat mit vertikal ausgerichteter Längsachse, d. h. ein hoch stehender Apparat mit Zuführung eines oder mehrerer flüssiger, flüssig/fester, gasförmig/flüssiger oder gasförmig/flüssig/fester Eduktströme in seinem oberen Bereich und eines gasförmigen Stromes - Edukt und/oder Inertgas - in seinem unteren Bereich, das heißt mit Gegenstromführung des flüssigen, flüssig/festen und des gasförmigen Stromes.

Der Reaktor ist aus mehreren, vorzugsweise übereinander angeordneten Kammern aufgebaut.

Die Zahl der Kammern kann vorteilhaft höchstens 200, bevorzugt höchstens 50, insbesondere höchstens 10 betragen.

Die Zahl der Kammern kann vorteilhaft mindestens 2, insbesondere mindestens 3 betragen.

Die Geometrie des Reaktors ist häufig zylindrisch, es sind jedoch auch andere Geometrien möglich.

Die Kammern sind voneinander durch flüssigkeitsdichte Böden getrennt, wobei jede Kammer durch je einen Flüssigkeitsüberlauf mit der unmittelbar darunter liegenden Kammer verbunden ist. Der Flüssigkeitsüberlauf kann dabei beispielsweise in Form eines Rohres oder eines Schachtes ausgebildet sein und er kann sowohl innerhalb als auch außerhalb des Reaktors angeordnet sein. Insbesondere können die Flüssigkeitsüberläufe zwei aufeinander folgender Kammern jeweils an einander gegenüberliegenden Seiten des Reaktors angeordnet sein. Aus der untersten Kammer wird über deren Flüssigkeitsüberlauf ein flüssiger Produktstrom abgezogen. Die unterste Kammer des Reaktors, der so genannte Sumpfbereich, kann in mindestens zwei Kammern unterteilt sein. Diese mindestens zwei Kammern können nebeneinander oder übereinander oder übereinander und nebeneinander angeordnet sein.

In einer bevorzugten Ausführungsform kann man einen Teil des dem Sumpfbereich des Reaktors entnommenen Produktstroms in flüssiger Form einem Wärmetauscher zuführen, mit Hilfe dieses Wärmetauschers das in dem Produktstrom enthaltene Wasser teilweise oder vollständig in den gasförmigen Zustand überführen und das den Wärmetauscher verlassende Gemisch dem Reaktor zuführen. Vorzugsweise kann man Reaktor verfahrensgemäß erhaltene Polyamide, Oligomere oder deren Gemische als Produkt flüssig, insbesondere im Sumpfbereich, entnehmen.

In einer anderen bevorzugten Ausführungsform kann man einen Teil oder die Gesamtheit des dem Sumpfbereich des Reaktors entnommenen Produktstroms in flüssiger Form einem Wärmetauscher zuführen, mit Hilfe dieses Wärmetauschers das in dem Produktstrom enthaltene Wasser teilweise oder vollständig in den gasförmigen Zustand überführen, das gasförmige Wasser dem Reaktor zuführen und das den Wärmetauscher verlassende flüssige Produkt als Wertprodukt erhalten.

In einer weiteren bevorzugten Ausführungsform kann man aus mindestens einer der im Sumpfbereich des Reaktors befindlichen Kammern Produkt in flüssiger Form einem Wärmetauscher zuführen, mit Hilfe dieses Wärmetauschers das in dem Produktstrom enthaltene Wasser teilweise oder vollständig in den gasförmigen Zustand überführen und das den Wärmetauscher verlassende Gemisch dem Reaktor zuführen. Vorzugsweise kann man Reaktor verfahrensgemäß erhaltene Polyamide, Oligomere oder deren Gemische als Produkt flüssig, insbesondere im Sumpfbereich, entnehmen.

In einer weiteren bevorzugten Ausführungsform kann man aus mindestens einer der im Sumpfbereich des Reaktors befindlichen Kammern Produkt in flüssiger Form einem Wärmetauscher zuführen, mit Hilfe dieses Wärmetauschers das in dem Produktstrom enthaltene Wasser teilweise oder vollständig in den gasförmigen Zustand überführen, das gasförmige Wasser dem Reaktor zuführen und das den Wärmetauscher verlassende flüssige Produkt als Wertprodukt erhalten.

Der in diesen bevorzugten Ausführungsformen eingesetzte Wärmetauscher kann sich in dem Reaktor oder außerhalb des Reaktors oder teilweise innerhalb, teilweise außerhalb des Reaktors befinden. Weiterhin kann der Wärmetauscher eine Vorrichtung oder mehrere getrennte Vorrichtungen umfassen.

Der Gasraum oberhalb des Flüssigkeitsspiegels in jeder Kammer ist mit der jeweils unmittelbar darüber angeordneten Kammer durch ein oder mehrere Leitrohre verbunden, das (die) jeweils in einen Gasverteiler mit Öffnungen für den Gasaustritt unterhalb des Flüssigkeitsspiegels mündet. Bezüglich der Anzahl und Anordnung der Leitrohre gibt es grundsätzlich keine Einschränkungen: es ist gleichermaßen möglich, ein einziges zentrales Leitrohr vorzusehen oder aber auch mehrere, über den Reaktorquerschnitt verteilt angeordnete Leitrohre. Ebenso ist es möglich, anstelle eines einzigen Gasverteilers pro Kammer mehrere getrennte Gasverteiler, jeweils mit Gaszuführung über ein oder mehrere Leitrohre, vorzusehen. In den Gasverteiler der vorletzten Kammer des Reaktors wird ein gasförmiger Strom über ein oder mehrere Leitrohre von außerhalb des Reaktors und/oder vom Sumpfbereich aus eingeleitet.

Es ist somit gleichermaßen möglich, einen einzigen Gasverteiler vorzusehen, mit Gaszuführung über ein oder mehrere Leitrohre, sowie auch mehrere miteinander nicht verbundene Gasverteiler, jeweils mit Gaszuführung über ein oder mehrere Leitrohre.

Bezüglich der vorliegend einsetzbaren Gasverteiler gibt es keine grundsätzlichen Einschränkungen: wesentlich ist, dass der Gasverteiler das ihm über das oder die Leitrohre zugeführte Gas aus dem Gasraum der unmittelbar darunter liegenden Kammer unterhalb des Flüssigkeitsspiegels der Kammer, in der der Gasverteiler angeordnet ist, austreten lässt. Der Gasaustritt soll dabei bevorzugt möglichst gleichförmig erfolgen. Als Gasverteiler kann grundsätzlich eine handelsübliche Begasungseinrichtung eingesetzt werden, beispielsweise Gasverteiler in Form von Rohren, die mit Austrittsöffnungen für das Gas ausgestattet sind und beispielsweise horizontal, das heißt in einer Ebene parallel zum flüssigkeitsdichten Boden der Kammer angeordnet sein können. Es ist auch möglich, ringförmige Gasverteiler vorzusehen. Die Öffnungen für den Gasaustritt müssen sich jedoch stets unterhalb des Flüssigkeitsspiegels in der Kammer befinden, bevorzugt in einem Abstand zum Flüssigkeitsspiegel von mindestens 10 % der gesamten Flüssigkeitshöhe in der Kammer, vorzugsweise von mindestens 30 %, besonders bevorzugt von mindestens 50 %. Es wurde gefunden, dass eine besonders günstige Eintauchtiefe der Öffnungen für den Gasaustritt unter dem Flüssigkeitsspiegel in der Kammer bei mindestens 50 mm liegt.

In einer bevorzugten Ausführungsvariante ist der Gasverteiler (die Gasverteiler) siphonartig ausgebildet, in Form einer oben geschlossenen Haube mit Öffnungen für den Gasaustritt in deren unterem Teil.

Die Haube kann, bis auf die Durchtrittsöffnungen für das oder die Leitrohre für die Gaszuführung und die Gasaustrittsöffnungen in ihrem unteren Teil vollständig geschlossen sein.

Es ist jedoch auch möglich, die Haube in deren unterem Teil offen auszubilden.

Das obere geschlossene Ende der Haube kann unterhalb des Flüssigkeitsspiegels enden, es kann jedoch auch über den Flüssigkeitsspiegel hinaus, in den Gasraum, reichen.

Die Haube des siphonartigen Gasverteilers kann grundsätzlich jede geometrische Form haben; es ist beispielsweise möglich, dass sie aus mehreren miteinander verbundenen Teilen besteht, die im Querschnitt bevorzugt kreuzförmige und/oder parallel oder konzentrisch oder radial angeordnet sind.

Die Öffnungen für den Gasaustritt sind bezüglich Anzahl, Querschnitt und Abstand vom Flüssigkeitsspiegel in der Kammer bevorzugt in der Weise ausgebildet, dass der Druckverlust des gasförmigen Stromes im Gasverteiler im Bereich von 0,1 bis 50 mbar liegt.

Die Öffnungen für den Gasverteiler sind bevorzugt auf derselben Höhe zueinander angeordnet.

Sie können grundsätzlich jede beliebige geometrische Form haben, beispielsweise kreisförmig, dreieckig oder schlitzförmig sein.

Die Mittellinie der Öffnungen liegt dabei bevorzugt in einem Abstand von ca. 1 cm bis 15 cm vom unteren Ende der Haube. Alternativ ist es auch möglich, anstelle von Öffnungen das untere Ende der Haube mit gezacktem Rand auszubilden. In einer weiteren Alternative ist es möglich, das untere Ende der Haube in Form eines Ringverteilers auszubilden.

Die Anordnung der Öffnungen auf unterschiedlicher Höhe zueinander kann für einen Betrieb mit zwei oder mehreren Lastbereichen vorteilhaft sein.

Die Höhe der Öffnungen für den Gasaustritt wird nach Bedarf in Abhängigkeit von der konkreten, im Reaktor durchzuführenden Reaktion so gewählt, dass zum einen genügend Stoffaustauschfläche für die konkrete gas/flüssig oder gas/flüssig/fest-Reaktion angeboten wird und zum anderen genügend Antrieb für die Air-Lift-Umwälzung der Flüssigkeit zur Verfügung gestellt wird.
Um jeden Gasverteiler ist im erfindungsgemäßen Reaktor mindestens ein vertikales Leitblech angeordnet, dessen oberes Ende unterhalb des Flüssigkeitsspiegels in der Kammer endet, vom Boden der Kammer beabstandet ist und das jede Kammer in einen oder mehrere begaste sowie einen oder mehrere unbegaste Räume trennt.

Das Leitblech kann in einer bevorzugten Ausführungsform als zylindermantelförmiges Einsteckrohr ausgebildet sein. Gleichfalls möglich ist jedoch auch beispielsweise die Form eines einfachen ebenen Bleches.

Das mindestens eine Leitblech ist vom Flüssigkeitsspiegel sowie vom Boden der Kammer beabstandet, bevorzugt dergestalt, dass im Wesentlichen keine Drosselung der Flüssigkeitsströmung durch das Leitblech erfolgt. Die Abstände des Leitblechs oder der Leitbleche zur Flüssigkeitsoberfläche sowie auch zum Boden der Kammer sind somit bevorzugt in der Weise festzulegen, dass sich die Strömungsgeschwindigkeit der Flüssigkeit bei der Umlenkung durch das Leitblech nicht oder nur geringfügig verändert.

Bezüglich der Gesamthöhe des Leitblechs gibt es grundsätzlich keine Einschränkungen. Diese kann insbesondere in Abhängigkeit von der gewünschten Verweilzeit pro Kammer, unter gleichzeitiger Berücksichtigung einer ausreichenden Durchmischung, entsprechend dimensioniert werden.

Das erfindungsgemäße Verfahren kann ein- oder mehrstufig durchgeführt werden.

Das erfindungsgemäße Verfahren umfasst gemäß einer Ausführungsform der Erfindung die folgenden Stufen:
(1) Umsetzung von Aminonitrilen oder Dinitrilen und Diaminen oder Gemischen davon, gegebenenfalls zusammen mit weiteren polyamidbildenden Monomeren und/oder Oligomeren mit dem wässrigen Medium im Reaktor bei einer Temperatur von 90 bis 400°C, bevorzugt 180 bis 310°C und einem Druck von 0,1 bis 35 x 10⁶ Pa, bevorzugt 1 bis 10 x 10⁶ Pa, wobei ein Umsetzungsgemisch erhalten wird,
(2) weitere Umsetzung des Umsetzungsgemisches bei einer Temperatur von 150 bis 400°C, vorzugsweise 200 bis 300°C und einem Druck, der niedriger ist als der Druck in Stufe 1, wobei die Temperatur und der Druck so gewählt werden, dass eine erste Gasphase und eine erste flüssige Phase erhalten werden, und die erste Gasphase von der ersten flüssigen Phase abgetrennt wird, und
(3) Versetzen der ersten flüssigen Phase mit einer gasförmigen oder flüssigen Phase, die Wasser oder ein wässriges Medium enthält, bei einer Temperatur von 90 bis 370°C, vorzugsweise 200 bis 300°C, und einem Druck von 0,1 bis 30 x 10⁶ Pa, wobei ein Produktgemisch erhalten wird.

Das Verfahren kann zusätzlich oder anstelle der Stufe 3 folgende Stufe umfassen:
(4) Nachkondensation des Produktgemisches bei einer Temperatur von 200 bis 280 °C und einem Druck, der niedriger ist als der Druck der Stufe 3, sofern Stufe 3 durchgeführt wird, wobei die Temperatur und der Druck so gewählt werden, dass eine zweite, Wasser und Ammoniak enthaltende Gasphase und eine zweite flüssige Phase, die das Polyamid enthält, erhalten werden.

Dabei können im Reaktor bzw. in Stufe 1 oder in Stufe 3 oder sowohl im Reaktor bzw. in Stufe 1 als auch in Stufe 3 Metalloxid-Katalysatoren als Festbett eingesetzt werden.

Allgemein kann die Umsetzung im Reaktor in Gegenwart von Festbettkatalysatoren, besonders bevorzugt Brönstedt-sauren Festbett-Katalysatoren durchgeführt werden.

Als Aminonitril können im Gemisch prinzipiell alle Aminonitrile, d.h. Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe eine Alkylengruppe mit mindestens einem C-Atom aufweisen. Unter den Aminoalkylarylnitrilen sind insbesondere solche bevorzugt, die die Amino- und Nitrilgruppe in 1,4-Stellung zueinander aufweisen.
Als ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836,938, DE-A 848,654 oder US 5 151543.

Selbstverständlich können auch Gemische mehrer Aminonitrile oder Gemische eines Aminonitrils mit weiteren Comonomeren, wie Caprolactam oder das untenstehend näher definierte Gemisch eingesetzt werden.

In einer besonderen Ausführungsform, insbesondere wenn man Copolyamide oder verzweigte oder kettenverlängerte Polyamide herstellen möchte, setzt man anstelle von reinem 6-Aminocapronitril folgendes Gemisch ein:

50 bis 99,99, bevorzugt 80 bis 90 Gew.-% 6-Aminocapronitril,
0,01 bis 50, bevorzugt von 1 bis 30 Gew.-% mindestens einer Dicarbonsäure, ausgewählt aus der Gruppe bestehend aus aliphatischen C₄-C₁₀-α,ω -Dicarbonsäuren, aromatischen C₈-C₁₂-Dicarbonsäuren und C₅-C₈-Cycloalkandicarbonsäuren,
0 bis 50 bevorzugt 0 bis 30 Gew.-% eines □, □-Diamins mit 4 bis 10 Kohlenstoffatomen,
0 bis 50 bevorzugt 0 bis 30 Gew.-% eines α,ω-C₂-C₁₂-Dinitrils sowie
0 bis 50 bevorzugt 0 bis 30 Gew.-% einer α,ω-C₅-C₁₂-Aminosäure oder des entsprechenden Lactams,
0 bis 10 Gew.-% mindestens einer anorganischen Säure oder deren Salz,
wobei die Summe der einzelnen Gewichtsprozentangaben 100 % beträgt.

Als Dicarbonsäuren kann man aliphatische C₄-C₁₀-α,ω-Dicarbonsäuren, wie Bernsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsäuren wie Terephthalsäure sowie C₅-C₈-Cycloalkandicarbonsäuren wie Cyclohexandicarbonsäure einsetzen.

Als α,ω-Diamin mit 4 bis 10 Kohlenstoffatomen kann man Tetramethylendiamin, Pentamethylendiamin, Hexamethylendiamin, Heptamethylendiamin, Octamethylendiamin, Nonamethylendiamin und Decamethylendiamin, bevorzugt Hexamethylendiamin, einsetzen.

Des Weiteren ist es auch möglich, Salze aus den genannten Dicarbonsäuren und Diaminen einzusetzen, insbesondere das Salz aus Adipinsäure und Hexamethylendiamin, so genanntes AH-Salz.

Als α,ω-C₂-C₁₂-Dinitril setzt man bevorzugt aliphatische Dinitrile, wie 1,4-Dicyanbutan (Adipodinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt Adipodinitril, ein.

Gewünschtenfalls kann man auch Diamine, Dinitrile und Aminonitrile, die sich von verzweigten Alkylen- oder Arylen- oder Alkylarylenen ableiten, verwenden.

Als α,ω-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, oder deren innere Amide, insbesondere Caprolactam, einsetzen.

Als Ausgangsstoffe im erfindungsgemäßen Verfahren eignen sich ferner Gemische mit Aminocarbonsäureverbindungen der allgemeinen Formel I

R²R³N-(CH₂)ₘ-C(O)R¹ (I)

in der R¹ für -OH, -OC₁₋₁₂-Alkyl oder -NR²R³ unabhängig voneinander Wasserstoff, C₁₋₁₂-Alkyl und C₅₋₈-Cycloalkyl, und m für 3, 4, 5, 6, 7,8,9,10,11 oder 12 stehen.

Besonders bevorzugte Aminocarbonsäureverbindungen sind solche, in denen R¹ OH, -O-C₁₋₄Alkyl wie-O-Methyl, -O-Ethyl, -O-n-Propyl, -O-i-Propyl, -O-n-Butyl, -O-sek.-Butyl, -O-ter.-Butyl und -NR²R³ wie -NH₂, -NHMe, -NHEt, -NMe₂ und -NEt₂ bedeuten, und m für 5 steht.

Ganz besonders bevorzugt sind 6-Aminocapronsäure, 6-Aminocapronsäuremethylester, 6--Aminocapronsäureethylester, 6-Aminocapronsäuremethylamid, 6-Aminocapronsäuredimethylamid, 6-Aminocapronsäureethylamid, 6-Aminocapronsäurediethylamid und 6-Aminocapronsäureamid.

Die Ausgangsverbindungen sind im Handel erhältlich oder beispielsweise gemäß EP-A 0 234 295 und Ind. Eng. Chem. Process Des. Dev. 17 (1978)9-16 herstellbar.

Es können auch beliebige Mischungen der genannten Verbindungen, Aminocarbonsäureverbindungen, Lactame, Diamine und Disäuren oder deren Salze eingesetzt werden.

Die Umsetzung in der ersten Stufe kann ohne Katalysator oder in Anwesenheit eines Metalloxid-Katalysators durchgeführt werden. Nachstehend sind die Umsetzungsbedingungen ohne Katalysator und mit Katalysator (in Klammern) angegeben.

Erfindungsgemäß wird in einer ersten Stufe (Stufe 1) ein Aminonitril mit Wasser, bei einer Temperatur von ungefähr 100 (90) bis ungefähr 400 (400)°C, vorzugsweise ungefähr 200 (180) bis ungefähr 350 (310)°C und insbesondere bei ungefähr 240 (220) bis ungefähr 290 (270)°C erhitzt, wobei ein Druck von ungefähr 0,1 bis ungefähr 35 (15) x 10⁶ Pa, vorzugsweise ungefähr 1 (1) bis ungefähr 15 (10) x 10⁶ Pa und insbesondere ungefähr 4 (4) bis ungefähr 11 (9) x 10⁶ Pa eingestellt wird. Dabei können in dieser Stufe Druck und Temperatur so aufeinander abgestimmt werden, dass eine flüssige und eine gasförmige Phase erhalten werden. Vorzugsweise soll das Reaktionsgemisch einphasig flüssig vorliegen.

Erfindungsgemäß setzt man insgesamt Wasser oder wässriges Extrakt in einem Molverhältnis von Aminoalkylnitril zu Wasser im Bereich von 1:1 bis 1:30 (1:10), besonders bevorzugt von 1:2 bis 1:10 (1:8), ganz besonders bevorzugt von 1:2 bis 1:8 (1:6), ein, wobei der Einsatz von Wasser oder wässrigem Extrakt im Überschuss, bezogen auf das eingesetzte Aminoalkylnitril, bevorzugt ist.

Bei dieser Ausführungsform entspricht die flüssige Phase dem Umsetzungsgemisch, während die gasförmige Phase abgetrennt wird. Dabei können im Rahmen dieser Stufe die gasförmige Phase sofort von der flüssigen Phase abgetrennt werden, oder das sich innerhalb dieser Stufe bildende Reaktionsgemisch kann zweiphasig flüssig-gasförmig vorliegen. Selbstverständlich können Druck und Temperatur auch so aufeinander abgestimmt werden, dass das Reaktionsgemisch einphasig-flüssig vorliegt.

Die Abtrennung der Gasphase kann durch den Einsatz von gerührten oder nichtgerührten Abscheidekesseln oder Kesselkaskaden sowie durch den Einsatz von Verdampferapparaten erfolgen, z.B. durch Umlaufverdampfer oder Dünnschichtverdampfer, wie durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des Weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, dass er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

In einer weiteren Ausführungsform ist der Reaktor der ersten Stufe mit Füllkörpern versehen, die eine axiale Rückvermischung der Reaktanden einschränken. Hierdurch erreicht das im Reaktor freiwerdende Ammoniak-Gas welches vorwiegend direkt nach dem Eintritt in den Reaktor entsteht, auf kürzestem Weg die Gasphase am Kopf des Reaktors. Die Störung des Strömungsprofils im weiteren Verlauf des Reaktors durch aufsteigende Gasblasen bzw. Konvektion ist deshalb gering.

Bzgl. der Verweilzeit des Reaktionsgemischs in der ersten Stufe bestehen keinerlei Beschränkungen; sie wird jedoch im allgemeinen im Bereich von ungefähr 10 Minuten bis ungefähr 10 Stunden, vorzugsweise zwischen ungefähr 30 Minuten und ungefähr 6 Stunden gewählt.

Obwohl auch bzgl. des Umsatzes an Nitrilgruppen in Stufe 1 keinerlei Beschränkungen existieren, beträgt insbesondere aus wirtschaftlichen Gründen der Umsatz an Nitrilgruppen in Stufe 1 im allgemeinen nicht weniger als ungefähr 70 Mol-%, vorzugsweise mindestens ungefähr 95 Mol-% und insbesondere ungefähr 97 bis ungefähr 99 Mol-%, jeweils bezogen auf die Molzahl an eingesetztem Aminonitril.

Den Umsatz an Nitrilgruppen ermittelt man üblicherweise mittels IR-Spektroskopie (CN-Valenz-Schwingung bei 2247 Wellenzahlen), NMR oder HPLC, bevorzugt durch IR-Spektroskopie.

In einer weiteren bevorzugten Ausführungsform wird das Aminonitril/Wasser-Gemisch kontinuierlich mit Hilfe eines Wärmetauschers erhitzt, und das so erhitzte Gemisch in ein auf die gleiche Temperatur temperiertes Reaktionsgefäß, vorzugsweise ein Rohr, das ggf. Einbauten wie Sulzer-Mischelemente enthalten kann, um Rückvermischungen zu vermeiden, eingeführt. Selbstverständlich können das Aminonitril und das Wasser auch getrennt voneinander aufgeheizt werden.

Weiterhin ist es erfindungsgemäß nicht ausgeschlossen, die Umsetzung in Stufe 1 auch in Gegenwart von sauerstoffhaltigen Phosphorverbindungen, insbesondere Phosphorsäure, phosphorige Säure und hypophosphorige Säure sowie deren Alkalimetall- und Erdalkalimetallsalze und Ammoniumsalze wie Na₃PO₄, NaH₂PO₄, Na₂HPO₄, NaH₂PO₃, Na₂HPO₃, NaH₂PO₂, K₃PO₄, KH₂PO₄, K₂HPO₄, KH₂PO₃, K₂HPO₃, KH₂PO₂ durchzuführen, wobei man das Molverhältnis von Phosphorverbindungen zu ω-Aminonitril im Bereich von 0,01:1 bis 1:1, bevorzugt von 0,01:1 bis 0,1:1 wählt.

Des weiteren ist es vorteilhaft, auch bekannte Metalloxide, wie Titandioxide, Zirkonoxid, Aluminiumoxid, Lanthanoxid, Magnesiumoxid, etc, bevorzugt einen Brönsted-Säurekatalysator, ausgewählt aus einem Beta- Zeolith-, Schichtsilikat- oder einem Titandioxid-Katalysator zur heterogenen Katalyse in den einzelnen Verfahrensstufen einzusetzen, um den Umsatz, insbesondere der Nitrilgruppen zu fördern. Solche Katalysatoren sind zum Beispiel in WO 03/089496 oder dem darin angeführten Stand der Technik beschrieben. Bevorzugt werden Titandioxide, insbesondere Titandioxide aus 70 bis 100 Gew.-% Anatas und 0 bis 30 Gew.-% Rutil, in dem bis zu 40 Gew.-% des Titandioxids durch andere Oxide wie Wolframoxid ersetzt sein können eingesetzt. Für reine Ausgangsprodukte (Aminonitril) wird vorzugsweise ein Titandioxid mit hohem Gehalt an Anatas-Struktur eingesetzt. Der Katalysator weist vorzugsweise ein Porenvolumen von 0,05 bis 5 ml/g, besonders bevorzugt 0,2 bis 0,5 ml/g auf. Die Schneidhärte kann im Bereich kleiner Werte, wie 2 N bis 10 N, mittlerer Werte, wie größer 10 N bis 20 N, oder auch hoher Werte wie Größer 20 N oder größer 25 N, liegen. Die BET-Oberfläche beträgt vorzugsweise mehr als 5 m²/g, besonders bevorzugt mehr als 15 m²/gₓ (DIN 66131).

Die Katalysatoren können dabei aus handelsüblichen TiO₂-Pulvern hergestellt werden. Beim Einsatz eines Anteils an Wolframoxid werden bis zu 40 Gew.-%, vorzugsweise bis zu 30 Gew.-%, besonders bevorzugt 15 bis 25 Gew.-% des Titandioxids durch Wolframoxid ersetzt. Die Konfektionierung der Katalysatoren kann nach an sich bekannten Verfahren wie zum Beispiel in Ertl, Knözinger, Weitkamp: "Handbook of heterogeous catalysis", VCH Weinheim, 1997, Seiten 98ff beschrieben, erfolgen. Die Metalloxide können in jeder beliebigen geeigneten Form eingesetzt werden. Vorzugsweise werden sie in Form von Granulaten, Strängen oder anderen Formkörpern eingesetzt. Besonders bevorzugt sind Stränge mit einem mittleren Durchmesser von 1 bis 6 mm, und einer mittleren Länge von 5 bis 30 mm. Die Granulate und Stränge können allein oder in Kombination mit metallischen Füllkörpern wie Raschig-Ringen eingesetzt werden. Dabei kann ein Gemisch aus Granulaten und Formkörpern vorliegen, oder es kann eine Schichtfolge von Metalloxid und Formkörper vorliegen.

Dabei werden die oben genannten Metalloxide nicht in Stufe 4 eingesetzt, können jedoch in Stufen 1 bis 3, vorzugsweise 1 und 3 eingesetzt werden, wobei der Einsatz in Stufe 1 besonders bevorzugt ist.

Erfindungsgemäß wird das in der ersten Stufe erhaltene Umsetzungsgemisch in Stufe 2 bei einer Temperatur von ungefähr 200 (150) bis ungefähr 400 (350)°C, vorzugsweise einer Temperatur im Bereich von ungefähr 210 (200) bis ungefähr 330 (300)°C und insbesondere im Bereich von ungefähr 230 (230) bis ungefähr 290 (270)°C und einem Druck, der niedriger ist als der Druck in Stufe 1 weiter umgesetzt. Vorzugsweise ist der Druck in der zweiten Stufe mindestens ungefähr 0,5 x 10⁶ Pa niedriger als der Druck in Stufe 1, wobei im Allgemeinen der Druck im Bereich von ungefähr 0,1 bis ungefähr 45 x 10⁶ Pa, vorzugsweise ungefähr 0,5 bis ungefähr 15 x 10⁶ Pa und insbesondere ungefähr 2 bis ungefähr 6 x 10⁶ Pa liegt.

Dabei werden in Stufe 2 die Temperatur und der Druck so gewählt, dass eine erste Gasphase und eine erste flüssige Phase erhalten werden, und die erste Gasphase von der ersten flüssigen Phase abgetrennt wird.

Die erste gasförmige Phase, die im Wesentlichen aus Ammoniak und Wasserdampf besteht, entfernt man im Allgemeinen kontinuierlich mit Hilfe einer Destillationsvorrichtung, wie einer Destillationskolonne. Die bei dieser Destillation ggf. mitabgeschiedenen organischen Bestandteile des Destillats, im überwiegendem Maße nicht umgesetztes Aminonitril, können in Stufe 1 und/oder Stufe 2 vollständig oder teilweise zurückgeführt werden.

Die Verweilzeit des Umsetzungsgemisches in Stufe 2 unterliegt keinerlei Beschränkungen, beträgt jedoch im allgemeinen ungefähr 2 Minuten bis ungefähr 5 Stunden, vorzugsweise ungefähr 10 Minuten bis ungefähr 1 Stunde.

Die Produktleitung zwischen der ersten und zweiten Stufe enthält ggf. Füllkörper, wie Raschig-Ringe oder Sulzer-Mischelemente, die eine kontrollierte Entspannung des Umsetzungsgemischs in die Gasphase ermöglichen.

In Stufe 3 wird die erste flüssige Phase mit einer gasförmigen oder flüssigen Phase, die ein wässriges Medium enthält, vorzugsweise Wasser oder Wasserdampf oder Extrakt, versetzt. Vorzugsweise geschieht dies kontinuierlich. Die Menge an zugegebenem Wasser oder Extrakt (als Flüssigkeit) liegt vorzugsweise im Bereich von ungefähr 10 bis ungefähr 500 ml, weiter bevorzugt ungefähr 20 bis ungefähr 150 ml, jeweils bezogen auf 1 kg der ersten flüssigen oder ersten festen Phase oder des Gemischs aus erster flüssiger und erster fester Phase. Durch diesen Wasser- oder Extraktzusatz werden in erster Linie die in der Stufe 2 verursachten Wasserverluste kompensiert und die Hydrolyse von Säureamidgruppen im Reaktionsgemisch gefördert. Daraus resultiert als weiterer Vorteil dieser Erfindung, dass das Gemisch der Ausgangsprodukte, wie es in Stufe 1 eingesetzt wird, lediglich mit einem kleinen Wasserüberschuss eingesetzt werden kann.

In einer anderen Ausführungsform der Erfindung können in der 3. Stufe wässrige Extrakte mit höherem Extraktgehalt von bis zu 85% eingesetzt werden. Gewünschtenfalls kann dem hochkonzentrierten wässrigen Extrakt vor der Zuführung in die 3. Stufe Caprolactam zugesetzt werden, wodurch die Löslichkeit von Caprolactam-Oligomeren verbessert und die Ausscheidung von Oligomeren und somit die Verstopfung von Anlagenteilen verhindert wird.

Vorzugsweise wird die Wasser oder wässrige Extrakte enthaltende gasförmige oder flüssige Phase vor der Einleitung in Stufe 3 in einem Wärmetauscher vorgeheizt und anschließend mit der ersten flüssigen Phase vermischt. Dabei können ggf. Mischelemente im Reaktor eingesetzt werden, die die Durchmischung der Komponenten fördern.
In die 3. Stufe kann auch der organische Anteil der abgetrennten Gasphase aus der 2. Stufe rückgeführt werden.
Üblicherweise erfolgt diese Rückführung der organischen Phase in wässriger Form.
Stufe 3 kann bei einer Temperatur von 150 bis 370°C und einem Druck von 0,1 bis 30 x 10⁶ Pa betrieben werden. Beim Vorliegen einer Katalysatorschüttung können die für Stufe 1 geltenden Bedingungen angewendet werden.

Bei einer vorgewählten Temperatur kann der Druck so eingestellt werden, dass er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Die in dieser Stufe einsetzbaren Apparaturen/Reaktoren können mit denen der Stufe 1, wie oben diskutiert, identisch sein.

In einer bevorzugten Ausführungsform wird bei der zweiphasigen Fahrweise der Reaktor der ersten Stufe von oben nach unten durchströmt, wobei dieser wiederum bevorzugt mit Katalysator und/oder Füllkörpern versehen ist, die eine axiale Rückvermischung der Reaktanden einschränken. Hierdurch erreicht das im Reaktor freiwerdende Ammoniak-Gas, welches vorwiegend direkt nach dem Eintritt in den Reaktor entsteht, auf kürzestem Weg die Gasphase am Kopf des Reaktors. Die Störung des Strömungsprofils im weiteren Verlauf des Reaktors durch aufsteigende Gasblasen bzw. Konvektion ist deshalb gering.

Die Verweilzeit in dieser Stufe unterliegt ebenfalls keinen Beschränkungen, aus wirtschaftlichen Gründen wählt man sie jedoch im allgemeinen im Bereich zwischen ungefähr 10 Minuten bis ungefähr 10 Stunden, vorzugsweise zwischen ungefähr 1 bis ungefähr 8 Stunden, besonders bevorzugt ungefähr 1 bis 6 Stunden.

Das in Stufe 3 erhaltene Produktgemisch kann dann, wie weiter unten beschrieben, weiterverarbeitet werden.

In einer bevorzugten Ausführungsform wird das Produktgemisch der Stufe 3 in einer vierten Stufe einer Nachkondensation bei einer Temperatur von ungefähr 200 bis ungefähr 350°C, vorzugsweise einer Temperatur von ungefähr 220 bis 300°C und insbesondere ungefähr 250 bis 270°C unterworfen. Stufe 4 wird bei einem Druck durchgeführt, der unterhalb des Drucks der Stufe 3 liegt, und vorzugsweise in einem Bereich von ungefähr 5 bis 1000 x 10³ Pa, weiter bevorzugt ungefähr 10 bis ungefähr 300 x 10³ Pa liegt. Im Rahmen dieser Stufe werden Temperatur und Druck so gewählt, dass eine zweite Gasphase und eine zweite flüssige oder feste Phase oder ein Gemisch aus zweiter flüssiger und zweiter fester Phase, die das Polyamid enthalten, erhalten werden.

Vorzugsweise wird die Nachkondensation gemäß Stufe 4 so durchgeführt, dass die relative Viskosität (gemessen bei einer Temperatur von 25°C und einer Konzentration von 1 g Polymer pro 100 ml in 96 gew.-%iger Schwefelsäure) des Polyamids einen Wert im Bereich von ungefähr 1,6 bis ungefähr 3,5 einnimmt.

In einer bevorzugten Ausführungsform kann man aus der flüssigen Phase gegebenenfalls vorhandenes Wasser mittels eines Inertgases wie Stickstoff austreiben.

Die Verweilzeit des Reaktionsgemisches in Stufe 4 richtet sich insbesondere nach der gewünschten relativen Viskosität, der Temperatur, dem Druck und der in Stufe 3 zugesetzten Wassermenge.

In der Produktleitung zwischen der Stufe 3 und der Stufe 4 können ggf. Füllkörper, bestehend z.B. aus Raschig-Ringen oder Sulzer-Mischelementen, eingesetzt werden, welche eine kontrollierte Entspannung des Reaktionsgemischs in der Gasphase ermöglichen.

In einer weiteren Ausführungsform kann erfindungsgemäß auf Stufe 3 verzichtet werden und zur Herstellung des Polyamids die Stufen (1), (2) und (4) ausgeführt werden. Vorzugsweise wird diese Variante - mit Katalysator - wie folgt durchgeführt:

In Stufe 1 wird mindestens ein Aminoalkylnitril mit einem Überschuss an Extraktwasser auf eine Temperatur im Bereich von ungefähr 250 bis ungefähr 350°C und einem Druck von ungefähr 4 bis 30 x 10⁶ Pa erhitzt, wobei man Druck und Temperatur so aufeinander abstimmt, dass das Reaktionsgemisch einphasig flüssig vorliegt, und wobei der Umsatz an Nitrilgruppen nicht kleiner als 95 Mol-%, bezogen auf die Mol-Zahl an eingesetztem Aminoalkylnitril, beträgt, wobei ein Umsetzungsgemisch erhalten wird.

Das Umsetzungsgemisch wird in Stufe 2 bei einer Temperatur im Bereich von ungefähr 220 bis ungefähr 300°C und einem Druck im Bereich von ungefähr 1 bis ungefähr 7 x 10⁶ Pa behandelt, wobei der Druck in der zweiten Stufe mindestens 0,5 x 10⁶ Pa niedriger ist als in Stufe 1. Gleichzeitig wird die entstandene erste Gasphase von der ersten flüssigen Phase abgetrennt.

Die in Stufe 2 erhaltene erste flüssige Phase wird in Stufe 3 bei einer Temperatur im Bereich von ungefähr 220 bis 300°C und einem Druck im Bereich von ungefähr 10 bis ungefähr 300 x 10³ Pa behandelt, wobei die dabei entstehende zweite, Wasser und Ammoniak enthaltende Gasphase von der zweiten flüssigen Phase abgetrennt wird. Innerhalb dieser Stufe wird die relative Viskosität (gemessen wie oben definiert) des erhaltenen Polyamids auf einen gewünschten Wert im Bereich von ungefähr 1,6 bis ungefähr 3,5 durch Wahl der Temperatur und der Verweilzeit eingestellt.

Anschließend wird die so erhaltene zweite flüssige Phase nach üblichen Methoden ausgetragen und, falls dies erwünscht ist, aufgearbeitet.

Beim Einsatz von Metalloxid-Katalysatoren können die vorstehend beschriebenen niedrigeren Temperaturen und Drücke angewendet werden.

Ferner kann man im Rahmen des erfindungsgemäßen Verfahrens auch eine Kettenverlängerung oder eine Verzweigung oder eine Kombination aus beidem durchführen. Dazu werden dem Fachmann bekannte Substanzen zur Verzweigung bzw. Kettenverlängerung von Polymeren in den einzelnen Stufen zugesetzt. Vorzugsweise werden diese Substanzen in Stufe 3 oder 4 zugesetzt.

Als einsetzbare Substanzen sind zu nennen:

Trifunktionelle Amine oder Carbonsäuren als Verzweiger bzw. Vernetzer. Beispiele geeigneter mindestens trifunktioneller Amine oder Carbonsäuren sind beschrieben in der EP-A-0 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise E-thylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((CH₂)ₙ-NR₂)₂ (**I**)

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3',5'-Biphenyltetracarbonsäure-Phthalocyanin, Naphthalocyanin, 3,5,5',5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen oder Carbonsäuren. Geringe Mengen an mindestens trifunktionellen Aminen können jedoch den trifunktionellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können, oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Laromin. Verzweigte aliphatische Diamine sind ebenfalls verwendbar, ein Beispiel ist Vestamin TMD (Trimethylhexamethylendiamin, hergestellt von der Hüls AG). Zudem können die Diamine aromatisch-aliphatisch sein, beispielsweise kann n-Xylylendiamin verwendet werden. Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.
Die difunktionellen Grundbausteine werden vorzugsweise in Mengen von 1 bis 55, besonders bevorzugt 1 bis 30, insbesondere 1 bis 15 µmol/g Polyamid eingesetzt.

In einer bevorzugten Ausführungsform kann man den Gehalt an cyclischem Dimer im erfindungsgemäß erhaltenen Polyamid-6 weiter reduzieren, indem man das Polyamid zuerst mit einer wässrigen Lösung von Caprolactam und anschließend mit Wasser extrahiert und/oder der Gasphasenextraktion (beispielsweise beschrieben in der EP-A-0 284968) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Dem Ausgangsgemisch und dem Reaktionsgemisch können in allen Stufen Kettenregler, wie aliphatische und aromatische Carbon- und Dicarbonsäuren, und Katalysatoren, wie sauerstoffhaltige Phosphorverbindungen, in Mengen im Bereich von 0,01 bis 5 Gew.-%, bevorzugt von 0,2 bis 3 Gew.-%, bezogen auf die Menge an eingesetzten polyamidbildenden Monomeren und Aminonitrilen, zugesetzt werden. Geeignete Kettenregler sind zum Beispiel Propionsäure, Essigsäure, Benzoesäure, Terephthalsäure sowie Triacetondiamin.

Zusatz- und Füllstoffe wie Pigmente, Farbstoffe und Stabilisatoren werden in der Regel vor dem Granulieren, bevorzugt in der zweiten, dritten und vierten Stufe der Reaktionsmischung zugeführt. Besonders bevorzugt sind Füll- und Zusatzstoffe dann einzusetzen, wenn die Reaktions- bzw. Polymermischung im weiteren Verfahrensablauf nicht mehr in Gegenwart von Festbettkatalysatoren umgesetzt wird. Als Zusatzstoffe können die Zusammensetzungen von 0 bis 40 Gew.-%, bevorzugt von 1 bis 30 Gew.-%, bezogen auf die gesamte Zusammensetzung, eines oder mehrerer schlagzähmodifizierender Kautschuke enthalten.

Die Erfindung wird durch die nachstehenden Beispiele näher erläutert:

### Beispiel

Einem adiabatisch bei 80 bar betriebenen Strömungsrohr (Gesamtlänge = 4,5 m; ø = 10 cm), welches mit Titandioxid-Katalysator gefüllt ist, wird kontinuierlich ein Eingangsstrom von 20 kg/h ACN und 14,6 kg/h Extraktwasser bestehend aus 91 Gew.-% Wasser, 8 Gew.-% Caprolactam und 1 Gew.-% dimerem Caprolactam von unten her zugeführt. Die Temperatur des Eingangstroms beträgt 208°C. In einer Reaktorhöhe von 1 m wird kontinuierlich 5,3 kg/h Extraktwasser (analoge Zusammensetzung wie Extraktwasser des Eingangsstroms) mit einer Temperatur von 85°C zugeführt. Eine weitere Seitenzuführung von Extraktwasser erfolgt in einer Reaktorhöhe von 2 m. Hierbei beträgt die Dosierrate 2,1 kg/h bei gleicher Zusammensetzung und Temperatur des Extraktwassers wie bei der 1. Seitendosierung.
Am Ende des Strömungsrohrs, wird ein PA 6 Präpolymer von 23 kg/h, bezogen auf die Summe aller organischen Bestandteile, erhalten mit einer Konzentration an Carboxylendgruppen von 25, 3 % bezogen auf die Konzentration an Aminoendgruppen.

### Vergleichsbeispiel 1

Vergleichsbeispiel 1 wird gemäß Beispiel 1 durchgeführt, jedoch erfolgt keine Seitendosierung von Extraktwasser, d.h. der Eingangsstrom umfasst nun 20 kg/h ACN und 22 kg/h Extraktwasser bestehend aus 91 Gew.-% Wasser, 8 Gew.-% Caprolactam und 1 Gew.-% dimerem Caprolactam. Die Temperatur des Eingangstroms beträgt 208°C. Am Ende des Strömungsrohrs, wird ein PA 6 Präpolymer von 23 kg/h, bezogen auf die Summe aller organischen Bestandteile, erhalten mit einer Konzentration an Carboxylendgruppen von 15, 4 % bezogen auf die Konzentration an Aminoendgruppen.

### Vergleichsbeispiel 2

Vergleichsbeispiel 2 wird gemäß Beispiel 1 durchgeführt, jedoch wird anstelle von Extraktwasser vollentsalztes (VE) Wasser verwendet. Demnach umfasst der Eingangsstrom 22 kg/h ACN und 13,3 kg/h VE-Wasser. In der 1. Seiteneinspeisung wird 4,8 kg/h und in der 2. Seiteneinspeisung 1,9 kg/h VE-Wasser kontinuierlich zugeführt. Am Ende des Strömungsrohrs, wird ein PA 6 Präpolymer von 23 kg/h, bezogen auf die Summe aller organischen Bestandteile, erhalten mit einer Konzentration an Carboxylendgruppen von 17,2 % bezogen auf die Konzentration an Aminoendgruppen.

### Vergleichsbeispiel 3

Vergleichsbeispiel 3 wird gemäß Beispiel 1 durchgeführt, jedoch wird anstelle von Extraktwasser vollentsalztes (VE) Wasser verwendet. Ferner erfolgt keine Seitendosierung in den Strömungsreaktor. Demnach umfasst der Eingangsstrom 22 kg/h ACN und 20 kg/h VE-Wasser. Die Eingangstemperatur beträgt erneut 208°C. Am Ende des Strömungsrohrs, wird ein PA 6 Präpolymer von 23 kg/h, bezogen auf die Summe aller organischen Bestandteile, erhalten mit einer Konzentration an Carboxylendgruppen von 14,5 % bezogen auf die Konzentration an Aminoendgruppen.
Das Beispiel verdeutlich, dass das erfindungsgemäße Verfahren basierend auf der Verwendung von Extraktwasser anstelle VE-Wasser und der Seitendosierung desselben, Polyamide bzw. PolyamidPräpolymere mit einem höheren Carboxylendgruppengehalt liefert, als Verfahren nach dem Stand der Technik.

## Patentansprüche

1. Kontinuierliches Verfahren zur Herstellung von Polyamiden, deren Oligomeren oder Gemischen davon, gegebenenfalls mit weiteren Umsetzungsprodukten, durch Umsetzung von Aminonitrilen oder Dinitrilen und Diaminen oder Gemischen davon, gegebenenfalls zusammen mit weiteren polyamidbildenden Monomeren und/oder Oligomeren, mit einem wässrigen Medium aus wässrigen Monomer- und Oligomer-Extrakten, die bei der Herstellung von Polyamiden während der Extraktion des Polymerisats mit Wasser anfallen, in einem Reaktor mit vertikaler Längsachse, der im Wesentlichen in Längsrichtung durchflossen wird, wobei Wasser und/oder das wässrige Medium an mindestens zwei unterschiedlichen Stellen entlang der vertikalen Längsachse in den Reaktor eingeführt werden, wobei an mindestens einer Stelle das wässrige Medium eingeführt wird.

2. Verfahren nach Anspruch 1, **dadurch gekennzeichnet, dass** das wässrige Medium an mindestens drei unterschiedlichen Stellen entlang der vertikalen Längsachse in den Reaktor eingeführt wird.

3. Verfahren nach Anspruch 1 oder 2, **dadurch gekennzeichnet, dass** der Reaktor ein Strömungsrohr, ein TVA Reaktor, ein Mehrkammerreaktor, der im Gleich- oder Gegenstrom betrieben wird, eine Destillationsvorrichtung oder eine Reaktivdestillationsvorrichtung ist.

4. Verfahren nach Anspruch 3, **dadurch gekennzeichnet, dass** der Reaktor ein Mehrkammerreaktor oder ein Strömungsrohr ist, an dessen einem Ende Aminonitrile oder Dinitrile und Diamine oder Gemische davon, gegebenenfalls zusammen mit weiteren polyamidbildenden Monomeren und/oder Oligomeren und ein erster Teil des wässrigen Mediums eingespeist werden, in dessen Verlauf weitere Teile des wässrigen Mediums zugeführt werden und an dessen anderem Ende ein Polyamid, deren Oligomere oder Gemische davon enthaltendes Umsetzungsgemisch ausgetragen wird.

5. Verfahren nach einem der Ansprüche 1 bis 4, **dadurch gekennzeichnet, dass** das Verfahren die folgenden Stufen umfasst:
(1) Umsetzung von Aminonitrilen oder Dinitrilen und Diaminen oder Gemischen davon, gegebenenfalls zusammen mit weiteren polyamidbildenden Monomeren und/oder Oligomeren mit dem wässrigen Medium im Reaktor bei einer Temperatur von 180 bis 310°C und einem Druck von 1 bis 10 x 10⁶ Pa, wobei ein Umsetzungsgemisch erhalten wird,
(2) weitere Umsetzung des Umsetzungsgemisches bei einer Temperaturvon 200 bis 300°C und einem Druck, der niedriger ist als der Druck in Stufe 1, wobei die Temperatur und der Druck so gewählt werden, dass eine erste Gasphase und eine erste flüssige Phase erhalten werden, und die erste Gasphase von der ersten flüssigen Phase abgetrennt wird, und
(3) Versetzen der ersten flüssigen Phase mit einer gasförmigen oder flüssigen Phase, die Wasser oder ein wässriges Medium enthält, bei einer Temperatur von 200 bis 300°C und einem Druck von 0,1 bis 30 x 10⁶ Pa, wobei ein Produktgemisch erhalten wird.

6. Verfahren nach Anspruch 5, das zusätzlich oder anstelle der Stufe 3 folgende Stufe umfasst:
(4) Nachkondensation des Produktgemisches bei einer Temperatur von 200 bis 280°C und einem Druck, der niedriger ist als der Druck der Stufe 3, sofern Stufe 3 durchgeführt wird, wobei die Temperatur und der Druck so gewählt werden, dass eine zweite, Wasser und Ammoniak enthaltende Gasphase und eine zweite flüssige Phase, die das Polyamid enthält, erhalten werden.

7. Verfahren nach einem der Ansprüche 1 bis 6, **dadurch gekennzeichnet, dass** im Reaktor bzw. in Stufe 1 oder in Stufe 3 oder sowohl im Reaktor bzw. in Stufe 1 als auch in Stufe 3 Metalloxid-Katalysatoren als Festbett eingesetzt werden.

8. Verfahren nach Anspruch 3 oder 4, **dadurch gekennzeichnet, dass** ein Reaktor (1) mit vertikal ausgerichteter Längsachse eingesetzt wird, wobei in dem Reaktor (1) das Umsetzungsprodukt aus dem Sumpf ausgeschleust und entstehendes Ammoniak und gegebenenfalls weitere entstehende niedermolekulare Verbindungen und Wasser über Kopf (2) abgezogen werden, wobei der Reaktor (1)
- mindestens zwei, in Längsrichtung übereinander angeordnete Kammern (4) aufweist, wobei
- die Kammern (4) voneinander durch flüssigkeitsdichte Böden (5) getrennt sind,
- jede Kammer (4) durch je einen Flüssigkeitsüberlauf (6) mit der unmittelbar darunterliegenden Kammer (4) verbunden ist und über den Flüssigkeitsüberlauf (6) der untersten Kammer (4) ein flüssiger Produktstrom abgezogen wird,
- der Gasraum (7) oberhalb des Flüssigkeitsspiegels in jeder Kammer (4) mit der jeweils unmittelbar darüber angeordneten Kammer (4) durch ein oder mehrere Leitrohre (8) verbunden ist, das (die) jeweils in einen Gasverteiler (9) mit Öffnungen (11) für den Gasaustritt unterhalb des Flüssigkeitsspiegels mündet,
- sowie mit jeweils mindestens einem um jeden Gasverteiler (9) vertikal angeordneten Leitblech (12), dessen oberes Ende unterhalb des Flüssigkeitsspiegels und dessen unteres Ende oberhalb des flüssigkeitsdichten Bodens (5) der Kammer (4) endet und das jede Kammer (4) in einen oder mehrere begaste (13) und in einen oder mehrere unbegaste (14) Räume trennt.

9. Verfahren nach einem der Ansprüche 1 bis 8, **dadurch gekennzeichnet, dass** das wässrige Medium einen Feststoffgehalt im Bereich von 2 bis 30 Gew.-% hat und mindestens 50 Gew.-% der Feststoffe Lactame und zyklische oligomere Lactame mit zwei bis sechs Ringgliedern sind, die sich vom eingesetzten Aminonitril ableiten.

10. Verfahren nach einem der Ansprüche 1 bis 9, **dadurch gekennzeichnet, dass** nur wässriges Medium an den mindestens zwei unterschiedlichen Stellen in den Reaktor eingeführt wird.

## Claims

1. A continuous process for producing polyamides, their oligomers or mixtures thereof, if appropriate with further reaction products, by reaction of aminonitriles or dinitriles and diamines or mixtures thereof, if appropriate together with further polyamide-forming monomers and/or oligomers, with an aqueous medium composed of aqueous monomer and oligomer extracts obtained from polyamide production by extraction of the polymer with water, in a reactor which has a vertical longitudinal axis and through which there is a flow substantially in the longitudinal direction, wherein water and/or the aqueous medium are introduced into the reactor at two or more different locations along the vertical longitudinal axis, wherein the aqueous medium is introduced at one or more locations.

2. The process according to claim 1, wherein the aqueous medium is introduced into the reactor at three or more different locations along the vertical longitudinal axis.

3. The process according to claim 1 or 2, wherein the reactor is a flow tube, a TVA reactor, a multichamber reactor operated co- or countercurrently, or a reactive or nonreactive distillation apparatus.

4. The process according to claim 3, wherein the reactor is a multichamber reactor or a flow tube which is fed with aminonitriles or dinitriles and diamines or mixtures thereof, if appropriate together with further polyamide-forming monomers and/or oligomers and a first portion of the aqueous medium at one end and with further portions of the aqueous medium being added in its continuation and from which a reaction mixture comprising a polyamide, its oligomers or mixtures thereof is discharged at its other end.

5. The process according to any one of claims 1 to 4 that comprises the following stages:
(1) reacting aminonitriles or dinitriles and diamines or mixtures thereof, if appropriate together with further polyamide-forming monomers and/or oligomers with the aqueous medium in the reactor at a temperature from 180 to 310°C and a pressure from 1 to 10 x 10⁶ Pa to obtain a reaction mixture,
(2) further reacting the reaction mixture at a temperature from 200 to 300°C and a pressure which is lower than the stage 1 pressure, wherein the temperature and the pressure are chosen such that a first gas phase and a first liquid phase are obtained and the first gas phase is separated from the first liquid phase,
(3) admixing the first liquid phase with a gaseous or liquid phase comprising water or an aqueous medium at a temperature from 200 to 300°C and a pressure from 0.1 to 30 x 10⁶ Pa to obtain a product mixture.

6. The process according to claim 5 that additionally or in lieu of stage 3 comprises the following stage:
(4) postcondensing the product mixture at a temperature from 200 to 280°C and a pressure which is lower than the stage 3 pressure, if stage 3 is carried out, wherein the temperature and the pressure are chosen such that a second gaseous phase, which comprises water and ammonia, and a second liquid phase, which comprises the polyamide, are obtained.

7. The process according to any one of claims 1 to 6 that utilizes metal oxide catalysts in the form of a fixed bed in the reactor or in stage 1 or in stage 3 or not only in the reactor or stage 1 but also in stage 3.

8. The process according to claim 3 or 4 that utilizes a reactor (1) having a vertically disposed longitudinal axis wherein, in the reactor (1), the reaction product is removed from the bottom and ammonia formed and any further low molecular weight compounds formed and water are taken off overhead (2), wherein the reactor (1)
- comprises at least two chambers (4) arranged above one another in the longitudinal direction, wherein
- the chambers (4) are separated from one another by liquid-tight bottom plates (5),
- every chamber (4) is connected via a liquid overflow (6) to the immediately underlying chamber (4) and a liquid product stream is taken off via the liquid overflow (6) of the bottommost chamber (4),
- the gas space (7) above the liquid surface in every chamber (4) is connected to the chamber (4) located immediately above it by one or more guide tubes (8) which opens, or which each open, into a gas distributor (9) having openings (11) for the exit of gas below the liquid surface,
- and is also provided with at least one guide plate (12) which is arranged vertically around each gas distributor (9) and whose upper end is below the liquid surface and whose lower end is above the liquid-tight bottom plate (5) of the chamber (4) and which divides each chamber (4) into one or more spaces (13) into which gas flows and one or more spaces (14) into which gas does not flow.

9. The process according to any one of claims 1 to 8 wherein the aqueous medium has a solids content in the range from 2% to 30% by weight and at least 50% by weight of the solids are lactams and cyclic oligomeric lactams having two to six ring members that are derived from the aminonitrile used.

10. The process according to any one of claims 1 to 9 wherein aqueous medium only is introduced into the reactor at the at least two different locations.

## Revendications

1. Procédé en mode continu de préparation de polyamides, leurs oligomères ou des mélanges de ceux-ci, éventuellement avec d'autres produits de réaction, par réaction d'aminonitriles ou dinitriles et diamines ou leurs mélanges, le cas échéant avec d'autres monomères et/ou oligomères formant un polyamide, avec un milieu aqueux d'extraits aqueux de monomère et d'oligomère, qui apparaissent lors de la fabrication de polyamides pendant l'extraction du polymère avec l'eau, dans un réacteur avec axe longitudinal vertical, parcouru essentiellement dans la direction longitudinale, l'eau et/ou le milieu aqueux étant introduits dans le réacteur en au moins deux points différents le long de l'axe longitudinal vertical, le milieu aqueux étant introduit au moins en un point.

2. Procédé selon la revendication 1, **caractérisé en ce que** le milieu aqueux est introduit dans le réacteur en au moins trois points différents le long de l'axe longitudinal vertical.

3. Procédé selon la revendication 1 ou 2, **caractérisé en ce que** le réacteur est un tube de flux, un réacteur TVA, un réacteur à plusieurs chambres qui fonctionne en co-courant ou à contre-courant, une installation de distillation ou un dispositif de distillation par réaction.

4. Procédé selon la revendication 3, **caractérisé en ce que** le réacteur est un réacteur à plusieurs chambres ou un tube de flux, à une extrémité duquel des aminonitriles ou dinitriles et des diamines ou leurs mélanges, le cas échéant avec d'autres monomères et/ou oligomères formant un polyamide ainsi qu'une première partie du milieu aqueux, sont introduits, d'autres parties du milieu aqueux étant amenées au cours de cette étape et à l'autre extrémité duquel un polyamide, ses oligomères ou un mélange réactionnel contenant des mélanges de ceux-ci sont évacués.

5. Procédé selon l'une des revendications 1 à 4, **caractérisé en ce que** le procédé comprend les étapes suivantes :
(1) réaction d'aminonitriles ou de dinitriles et de diamines ou de leurs mélanges, le cas échéant avec d'autres monomères et/ou oligomères formant un polyamide avec le milieu aqueux dans le réacteur à une température de 180 à 310°C et à une pression de 1 à 10 x 10⁶ Pa, un mélange réactionnel étant obtenu,
(2) réaction ultérieure du mélange réactionnel à une température de 200 à 300°C, et à une pression plus basse que la pression à l'étape 1, la température et la pression étant sélectionnées de telle sorte qu'une première phase gazeuse et une première phase liquide sont obtenues, et la première phase gazeuse est séparée de la première phase liquide, et
(3) mélange de la première phase liquide avec une phase gazeuse ou liquide, qui contient de l'eau ou un milieu aqueux, à une température de 200 à 300°C et à une pression de 0,1 à 30 x 10⁶ Pa, un mélange de produits étant obtenu.

6. Procédé selon la revendication 5, qui comprend en plus ou en lieu et place de l'étape 3, l'étape suivante:
(4) condensation ultérieure du mélange de produits à une température de 200 à 280°C, et à une pression plus basse que la pression à l'étape 3, à condition que l'étape 3 ait été exécutée, la température et la pression étant sélectionnées de telle sorte qu'une deuxième phase gazeuse contenant de l'eau et de l'ammoniac et une deuxième phase liquide qui contient le polyamide sont obtenues.

7. Procédé selon l'une des revendications 1 à 6, **caractérisé en ce que** dans le réacteur ou à l'étape 1 ou 3 ou dans le réacteur ou à l'étape 1 comme à l'étape 3, on utilise comme lit fixe des catalyseurs d'oxyde de métal.

8. Procédé selon la revendication 3 ou 4, **caractérisé en ce qu'**on utilise un réacteur (1) avec un axe longitudinal à orientation verticale, le produit de réaction étant évacué dans le réacteur (1) par le bas et l'ammoniac obtenu et éventuellement d'autres composés à bas poids moléculaire apparaissant et l'eau étant soutirés de la tête (2), le réacteur (1) :
- présentant au moins deux chambres (4) superposées et agencées dans le sens longitudinal, où
- les chambres (4) sont séparées l'une de l'autre par des plateaux (5) étanches aux liquides,
- chaque chambre (4) étant reliée par un trop-plein de liquide (6) à la chambre située directement en dessous (4) et un courant de produit liquide étant soutiré par le trop-plein de liquide (6) de la chambre la plus basse (4),
- la chambre à gaz (7) au-dessus du niveau de liquide dans chaque chambre (4) étant reliée avec la chambre (4) respective agencée directement au-dessus par un ou plusieurs tuyaux de conduite (8) qui débouchent chaque fois dans un répartiteur de gaz (9) ayant des orifices (11) pour la sortie du gaz en dessous du niveau de liquide,
- ainsi qu'avec à chaque fois au moins une tôle de guidage (12) agencée à la verticale autour de chaque répartiteur de gaz (9) dont l'extrémité supérieure finit en dessous du niveau de liquide et dont l'extrémité inférieure finit au-dessus du plateau étanche aux liquides (5) de la chambre (4) et laquelle sépare chaque chambre (4) en une ou plusieurs zones recevant du gaz (13) et une ou plusieurs zones ne recevant pas de gaz (14).

9. Procédé selon l'une des revendications 1 à 8, **caractérisé en ce que** le milieu aqueux a une teneur en solides comprise entre 2 et 30 % en poids et au moins 50 % en poids des solides sont des lactames et des lactames oligomères cycliques avec deux à six éléments de cycle qui dérivent de l'aminonitrile utilisé.

10. Procédé selon l'une des revendications 1 à 9, **caractérisé en ce qu'**on introduit dans le réacteur uniquement un milieu aqueux aux deux points différents ou plus.
